# EUROPEAN PATENT APPLICATION

(11) **EP 2 363 675 A2**
(43) Date of publication of application: **07.09.2011**
(21) Application number: 11150834.7
(22) Date of filing: 13.01.2011
(51) Int. Cl.: F28D 7/10, F28F 1/40, F28F 1/42, F28F 9/02

(54) **Double pipe and heat exchanger having the same**

(30) Priority: 03.03.2010 KR 20100019822
(71) Applicant: Hs R & A Co., Ltd., Yangsan-si, Gyeongsangnam-do (KR)
(72) Inventor: Hur, Sung Ryong, Busanjin-gu, Busan (KR); Choi, Jae Hyeok, Yangsan-si, Gyeongsangnam-do (KR); Kim, Young Jun, Yangsan-si, Gyeongsangnam-do (KR); Park, Young Jun, Dongnamgu, Cheonnan-si, Chungcheongnam-d (KR); Yoon, Jeoung Hoon, Asan-si Chungcheongnam-do (KR)
(74) Representative: Jansen, Cornelis Marinus

(57) **Abstract**

A double pipe (10) and a heat exchanger having the same are provided. The double pipe (10) including an outer pipe (11) and an inner pipe (13) formed within the outer pipe (11) includes: a plurality of barrier ribs (11a) formed in a length direction and disposed at a predetermined distance in a circumferential direction between the outer pipe (11) and the inner pipe (13); and a plurality of protruding portions (13a) formed at positions corresponding to each of the plurality of barrier ribs (11a) and protruded in a center direction and formed in a length direction of the inner pipe (13) from an inner circumferential surface of the inner pipe (13).

## Description

### BACKGROUND OF THE INVENTION

### Field of the Invention

The present invention relates to a double pipe and a heat exchanger having the same, and more particularly, to a double pipe and a heat exchanger having the same that can improve heat exchange efficiency of a heat exchanger by providing a double pipe structure having an excellent thermal conductivity performance.

### Description of the Related Art

A vehicle air conditioner is installed in a vehicle to send a cold air into a vehicle room, thereby cooling the vehicle.

A general air conditioning system of such an air conditioner has a freezing cycle formed by connecting, to a refrigerant pipe, a compressor for compressing and sending a refrigerant, a condenser for condensing a high pressure of refrigerant sent from the compressor, an expansion valve for depressurizing a refrigerant condensed and liquefied in the condenser, and an evaporator for cooling air ejected into a vehicle room with an endothermic reaction by an evaporation latent heat of a refrigerant by exchanging a heat of a low pressure of liquid refrigerant depressurized by the expansion valve with a heat of air to be sent into the vehicle room and by evaporating the refrigerant, and cools the vehicle room through a refrigerant circulation process.

In order to improve a performance of an air conditioner, an apparatus that can supercool a liquid refrigerant of a high temperature and a high pressure expanded by an expansion valve and that can appropriately adjust a superheat degree of a refrigerant discharged in an evaporator is necessary, and therefore a recently developing cooling system has a predetermined internal heat exchanger in an expansion valve inhalation side and a compressor inhalation side. Such an internal heat exchanger has a double pipe structure and includes an inner pipe connected between a compression pipe in an evaporator and an outer pipe connected between a condenser and an expansion valve.

Agas refrigerant of a low temperature and a low pressure flows in the inner pipe, and a liquid refrigerant of a high temperature and a high pressure flows in the outer pipe, and they flow in an opposite direction to exchange a heat thereof. That is, a temperature is appropriately adjusted by exchanging a heat of a liquid refrigerant of a high temperature and a high pressure injected into an expansion valve and a heat of a gas refrigerant of a low temperature and a low pressure discharged from an evaporator.

When a heat transfer rate of such an internal heat exchanger increases, heat exchange efficiency thereof increases and is largely influenced by a structure of a double pipe.

In order to limit a discharge of greenhouse gas to the atmosphere, a hydro fluoro carbon (HFC)-based 134a (R134a) refrigerant, which is a presently used global warming material will be replaced with a hydro fluoro olefin (HFO)-based 1234yf refrigerant, which is a low global warming material, and the 1234yf refrigerant to be a replacement in the future has a performance about 15% lower than R134a, which is a present refrigerant in an existing heat exchanger.

In order to improve a lacking refrigerant performance, elements constituting an air conditioner, such as a compressor, an evaporator, and a condenser should be improved, however in order to improve the elements, much cost is required.

Therefore, in order to improve efficiency and performance of a vehicle air conditioning system according to a refrigerant change, it is necessary to improve deterioration in performance of a heat exchanger.

### SUMMARY OF THE INVENTION

The present invention has been made in view of the above problems, and provides a double pipe and a heat exchanger having the same that can improve cooling efficiency of a cooling system by improving heat exchange efficiency of a heat exchanger by a double pipe structure.

In accordance with an aspect of the present invention, a double pipe including an outer pipe and an inner pipe formed within the outer pipe includes: a plurality of barrier ribs formed in a length direction and disposed at a predetermined distance in a circumferential direction between the outer pipe and the inner pipe; and a plurality of protruding portions formed at positions corresponding to each of the plurality of barrier ribs and protruded in a center direction and formed in a length direction of the inner pipe from an inner circumferential surface of the inner pipe.

In accordance with another aspect of the present invention, a double pipe heat exchanger includes: a double pipe including a plurality of barrier ribs formed in a length direction and disposed at a predetermined distance in a circumferential direction between an outer pipe and an inner pipe, and a plurality of protruding portions formed at positions corresponding to each of the plurality of barrier ribs and protruded in a center direction and formed in a length direction of the inner pipe from an inner circumferential surface of the inner pipe; and a connector coupled to an end portion of the double pipe, wherein all the outer pipe, the inner pipe, the plurality of barrier ribs, and the plurality of protruding portions are integrally formed, and an outer pipe opening for inserting the double pipe is formed at one side of the connector, an inner pipe opening for inserting the other pipe having the same diameter as that of the inner pipe of the double pipe is formed at the other side of the connector, and space to be connected to an outer pipe flow path formed between the inner pipe and the outer pipe of the double pipe is formed within the connector.

### BRIEF DESCRIPTION OF THE DRAWINGS

The objects, features and advantages of the present invention will be more apparent from the following detailed description in conjunction with the accompanying drawings, in which:
FIG. 1 is a perspective view illustrating an integral double pipe of a double pipe heat exchanger according to an exemplary embodiment of the present invention;
FIGS. 2A to 2D are perspective views illustrating modified examples of the integral double pipe of FIG. 1;
FIG. 3A is a perspective view illustrating a connector of the double pipe heat exchanger of FIG. 1;
FIG. 3B is a perspective view illustrating a modified example of the connector of FIG. 3A;
FIG. 4A is a perspective view illustrating an integral double pipe coupled to the connector of FIG. 3A;
FIG. 4B is a perspective view illustrating an integral double pipe coupled to the connector of FIG. 3B;
FIG. 5 is a perspective view illustrating a separated double pipe of a double pipe heat exchanger according to another exemplary embodiment of the present invention;
FIGS. 6A and 6B are perspective views illustrating modified examples of the separated double pipe of FIG. 5;
FIG. 7A is a perspective view illustrating a separated double pipe coupled to the connector of FIG. 3A;
FIG. 7B is a perspective view illustrating a separated double pipe coupled to the connector of FIG. 3B;
FIG. 8 is a perspective view illustrating an integral connector formed in an outer pipe of the separated double pipe of FIG. 5; and
FIG. 9 is a perspective view illustrating a separated double pipe having the integral connector of FIG. 8.

### DETAILED DESCRIPTION OF EXEMPLARY EMBODIMENTS

Hereinafter, exemplary embodiments of the present invention are described in detail with reference to the accompanying drawings. The same reference numbers are used throughout the drawings to refer to the same or like parts. The views in the drawings are schematic views only, and are not intended to be to scale or correctly proportioned. Detailed descriptions of well-known functions and structures incorporated herein may be omitted to avoid obscuring the subject matter of the present invention.

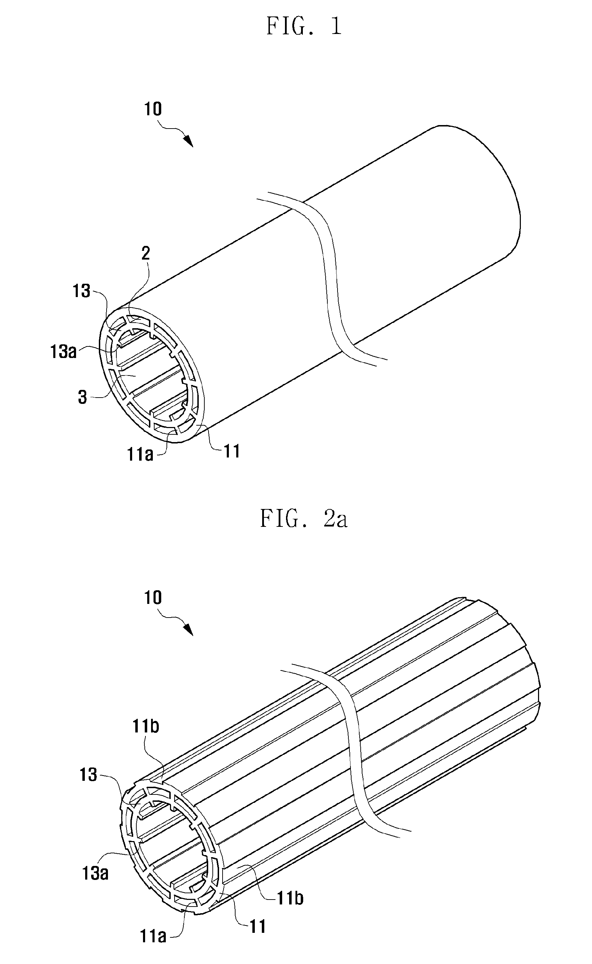

FIG. 1 is a perspective view illustrating an integral double pipe of a double pipe heat exchanger according to an exemplary embodiment of the present invention, and FIGS. 2A to 2D are perspective views illustratingmodifiedexamples of the integral double pipe of FIG. 1.

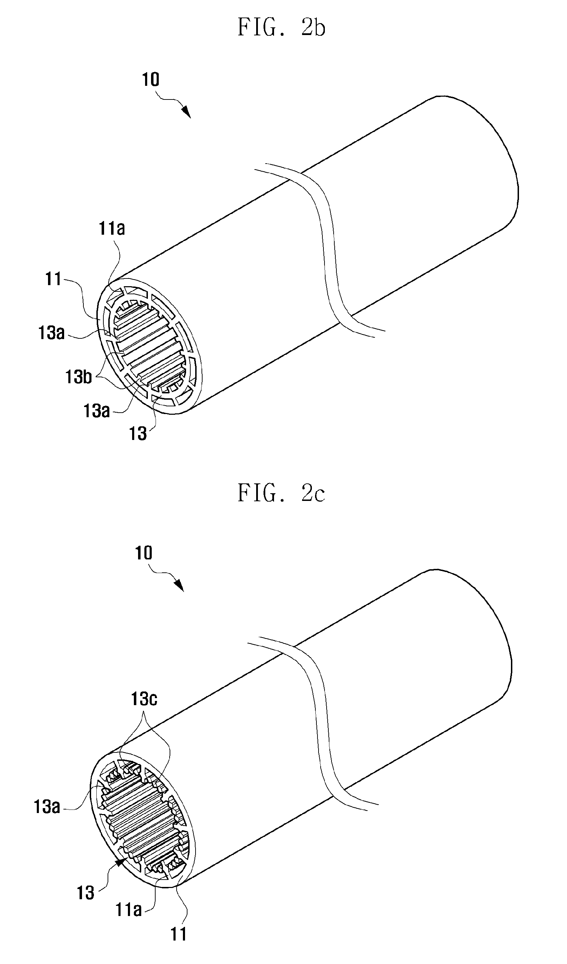

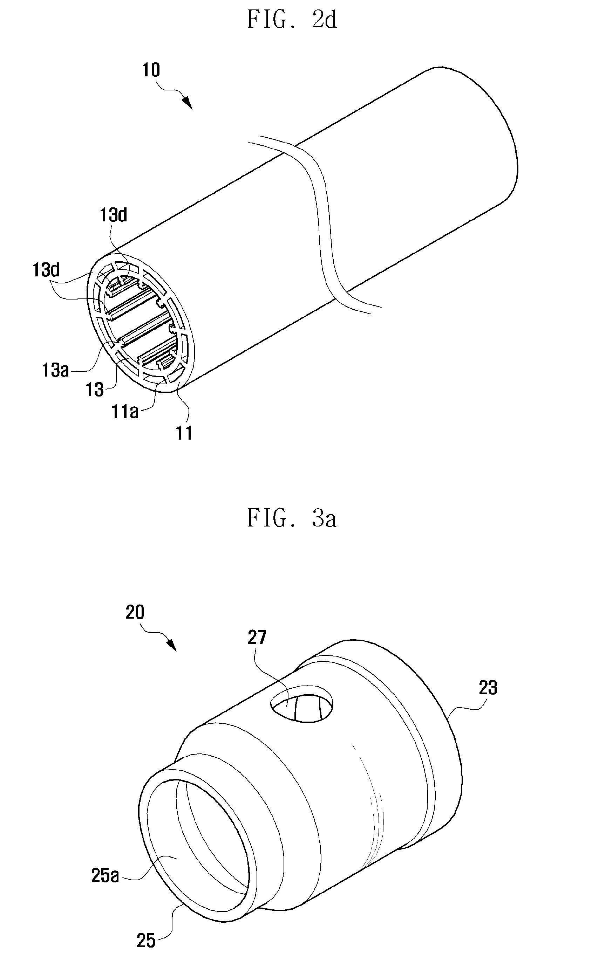

Referring to FIGS. 1 and 2, an integral double pipe 10 according to the present exemplary embodiment includes an outer pipe 11 and an inner pipe 13.

The integral double pipe 10 includes a plurality of barrier ribs 11a formed in a length direction and disposed at a predetermined distance in a circumferential direction between the outer pipe 11 and the inner pipe 13, and a plurality of protruding portions 13a formed at a position corresponding to each of the plurality of barrier ribs 11a and protruded in a center direction and formed in a length direction of an inner pipe from an inner circumferential surface of the inner pipe 13.

The outer pipe 11, the plurality of barrier ribs 11a, the inner pipe 13, and the plurality of protruding portions 13a are integrally formed.

Agas refrigerant of a low temperature and a low pressure flows in the inner pipe 13, a liquid refrigerant of a high temperature and a high pressure flows in the outer pipe 11, and the refrigerants flow in an opposite direction to exchange a heat thereof.

A liquid refrigerant of a high temperature and a high pressure flows in an outer pipe flow path 2 formed between the outer pipe 11 and the inner pipe 13.

Agas refrigerant of a low temperature and a low pressure flows in an inner pipe flow path 3 formed in the inner pipe 13.

Both the outer pipe 11 and the inner pipe 13 of the integral double pipe 10 have a circular sectional shape, however a shape of the outer pipe 11 and the inner pipe 13 of the integral double pipe 10 is not limited thereto and the outer pipe 11 and the inner pipe 13 can have various polygonal shapes such as a quadrangle, oval, and triangle.

The barrier rib 11a and the protruding portion 13a have a rectangular sectional shape, but a shape of the barrier rib 11a and the protruding portion 13a is not limited thereto and the barrier rib 11a and the protruding portion 13a can have a polygonal shape such as a circle, oval, and triangle.

For example, an inner diameter of the outer pipe 11 is 22^{mm} and a thickness thereof is about 3^{mm}, and an inner diameter of the inner pipe 13 is 17^{mm} and a thickness thereof is about 2.4^{mm}.

A sectional thickness and height of the barrier rib 11a and the protruding portion 13a are about 1 mm. A cylindrical angle formed between the barrier rib 11a and the protruding portion 13a and a next barrier rib 11a and a next protruding portion 13a is about 10 to 30°.

FIGS. 2A to 2D illustrate modified examples of the integral double pipe 10 of FIG. 1.

Referring to FIG. 2A, a plurality of grooves 11b are formed in a length direction at a predetermined distance in a circumferential direction of an outer circumferential surface of the outer pipe 11.

Referring to FIG. 2B, additional protruding portion 13b is formed between two adjacent protruding portions 13a of a plurality of protruding portions 13a of the inner pipe 13.

Referring to FIG. 2C, in at least one of an outer circumferential surface and an inner circumferential surface of the inner pipe 13, an uneven portion 13c is formed in a portion in which the plurality of protruding portions 13a are not formed.

In FIG. 2C, the uneven portion 13c is formed in both an outer circumferential surface and an inner circumferential surface of the inner pipe 13, however may be formed only in an outer circumferential surface or an inner circumferential surface of the inner pipe 13. Further, instead of additional protruding portion 13b of FIG. 2B, an uneven portion 13c may be formed.

Referring to FIG. 2D, an uneven portion 13d is formed in a surface of the protruding portion 13a of the inner pipe 13.

In FIG. 2D, the uneven portion 13d is formed in the protruding portion 13a of the inner pipe 13, however the uneven portion 13d may be formed in the additional protruding portion 13b of the inner pipe 13 of FIG. 2B.

Further, the uneven portion 13d may be formed in a plurality of barrier ribs 11a formed between the outer pipe 11 and the inner pipe 13.

A refrigerant flowing to the integral double pipe 10 may be hydro fluoro olefin (HFO)-based 1234yf.

In an exemplary embodiment and modified examples of such a double pipe, when the refrigerant 1234yf to be used in the future having a higher specific volume than that of a presently used refrigerant, for example a refrigerant R134a is used, a sectional area is formed by a plurality of protruding portions 13a and a plurality of barrier ribs 11a and thus thermal efficiency can be maximized, and thicknesses of the outer pipe and the inner pipe can be minimized.

The integral double pipe 10 is made of one of aluminum, iron, plastic, and stainless steel.

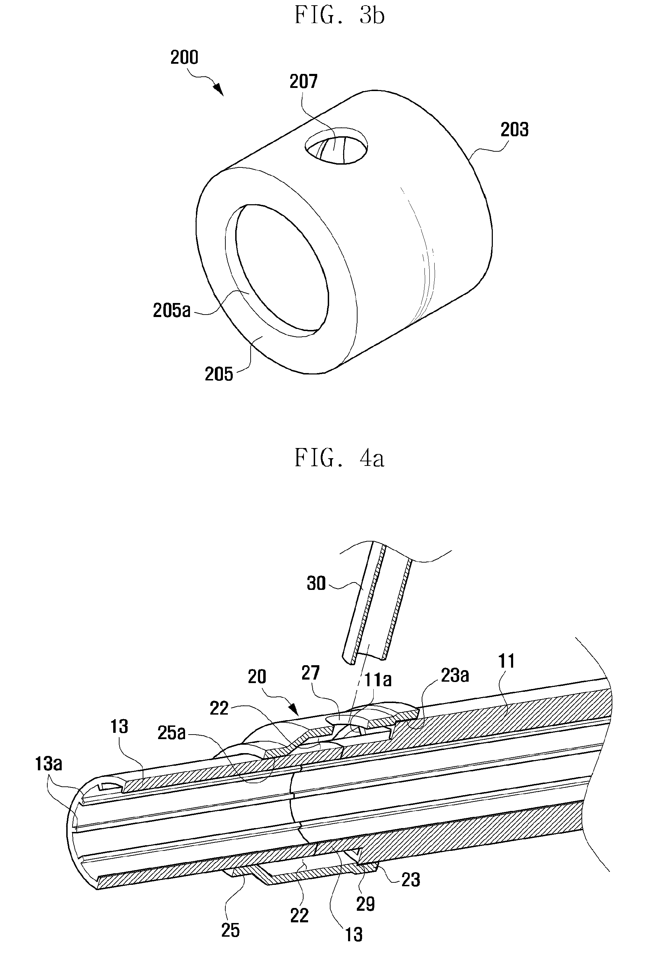

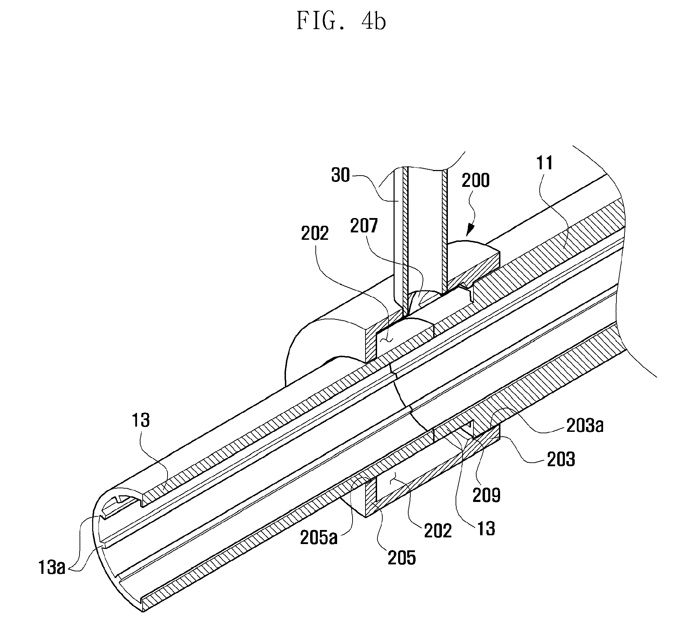

FIG. 3A is a perspective view illustrating a connector of the double pipe heat exchanger of FIG. 1, FIG. 3B is a perspective view illustrating a modified example of the connector of FIG. 3A, FIG. 4A is a perspective view illustrating an integral double pipe coupled to the connector of FIG. 3A, and FIG. 4B is a perspective view illustrating an integral double pipe coupled to the connector of FIG. 3B.

Referring to FIGS. 3A and 4A, a double pipe heat exchanger according to the present exemplary embodiment includes an integral double pipe 10 and a connector 20 coupled to an end portion of the integral double pipe 10.

At one side of the connector 20, an outer pipe opening 23a for inserting the integral double pipe 10 is formed and at the other side thereof, an inner pipe opening 25a for inserting another pipe (13) having the same a diameter as that of the inner pipe 13 of the integral double pipe 10 is formed, and in an inner part thereof, a space 22 to be connected to a flow path between the inner pipe 13 and the outer pipe 11 of the integral double pipe 10 is formed.

The connector 20 is described in detail hereinafter.

Referring to FIG. 3A, the inside of the connector 20 is hollow, and the connector 20 includes an outer pipe coupler 23 formed at one end of the connector 20 and having an outer pipe opening 23a for inserting and coupling the outer pipe 11, an inner pipe coupler 25 formed at the other end of the connector 20 and having an inner pipe opening 25a for inserting the inner pipe 13 and for coupling it to an outer circumference of the inner pipe 13, and an external penetration hole 27 for inserting an outer circumferential surface between the outer pipe coupler 23 and the inner pipe coupler 25. The inner pipe 13 integrally formed with the outer pipe 11 and another inner pipe 13 inserted through the inner pipe opening 25a from the outside are coupled by welding within the connector 20.

Referring to FIGS. 3B and 4B, the inside of the connector 200 in which the connector 20 of FIGS. 3A and 4A is modified is hollow, and the connector 200 includes an outer pipe coupler 203 formed at one end of the connector 20 and having an outer pipe opening 203a for inserting and coupling the outer pipe 11, an inner pipe coupler 205 formed at the other end of the connector 200 and having an inner pipe opening 205a for inserting the inner pipe 13 and for coupling it to the outer circumference of the inner pipe 13, and an external penetration hole 207 for inserting an outer circumferential surface between the outer pipe coupler 203 and the inner pipe coupler 205.

A difference between the connector 20 of FIG. 3A and the connector 200 of FIG. 3B is that the connector 20 of FIG. 3A has a reduced outer circumferential diameter as advancing to the inner pipe coupler 25, whereas the connector 200 of FIG. 3B has the same outer circumferential diameter in the inner pipe coupler 205 and the outer pipe coupler 203.

Referring to FIGS. 3A, 3B, 4A, and 4B, spaces 22 and 202 to be connected to the outer pipe flow path 2 (see FIG. 1) of the integral double pipe 10 and the external penetration holes 27 and 207 are formed at the inside between the outer pipe couplers 23 and 203 and the inner pipe couplers 25 and 205 of the connectors 20 and 200, respectively. Therefore, the external insertion holes 27 and 207 and the outer pipe flow path 2 are connected through the spaces 22 and 202, respectively.

In the connectors 20 and 200, in order to latch and fix the outer pipe 11, latch jaws 29 and 209 are formed at the inside of the outer pipe couplers 23 and 203, respectively.

Therefore, the connectors 20 and 200 are coupled to the outer pipe 111 through outer pipe openings 23a and 203a of outer pipe couplers 23 and 203, and are coupled to the inner pipe 113 through inner pipe openings 25a and 205a such that the inner pipe 113 extends to the outside of the connectors 20 and 200 through inner pipe openings 25a and 205a. When the outer pipe 11 and the inner pipe 13 are coupled, by welding both ends of each of the connectors 20 and 200, they are fixed and leakage of a solvent is prevented.

Each of the connectors 20 and 200 is coupled to the other side of the integral double pipe 10, and an outer refrigerant pipe 30 is coupled to each of the external penetration holes 27 and 207 of each of the connectors 20 and 200 coupled to both sides of the integral double pipe 10. The outer refrigerant pipe 30 is coupled by welding.

Therefore, a closed loop is formed in the outer pipe 11 by each of the connectors 20 and 200 coupled to one side of the integral double pipe 10 and each of the connectors 20 and 200 coupled to the other side thereof, and a liquid refrigerant of a high temperature and a high pressure flows in the outer pipe flow path 2 via each of spaces 22 and 202 through the outer refrigerant pipe 30 coupled to each of the external insertion holes 27 and 207.

In the inner pipe 13, a gas refrigerant of a low temperature and a low pressure flows in an opposite direction and thus heat exchange can be performed.

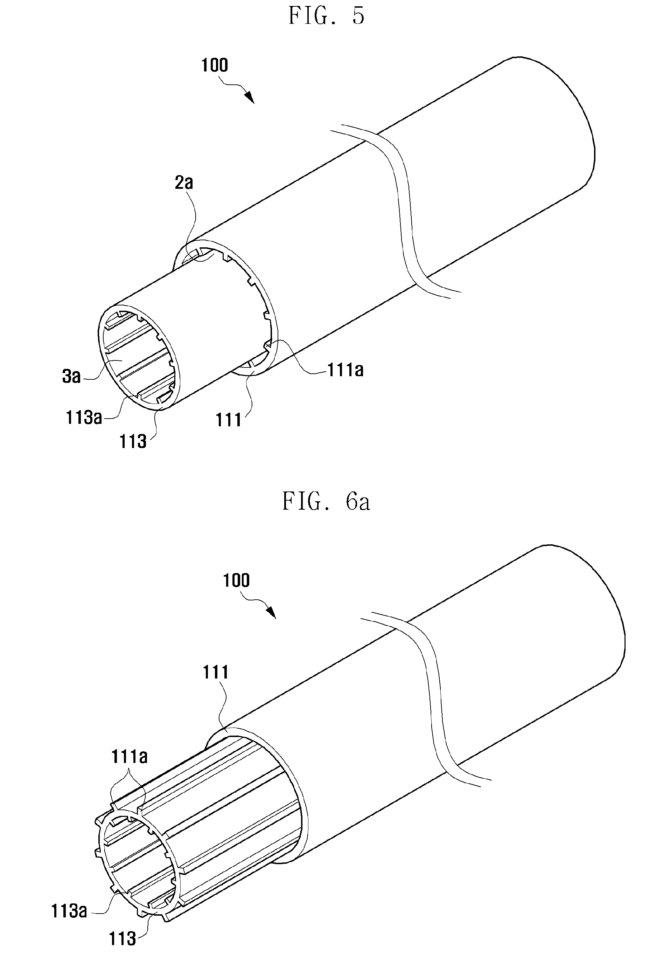

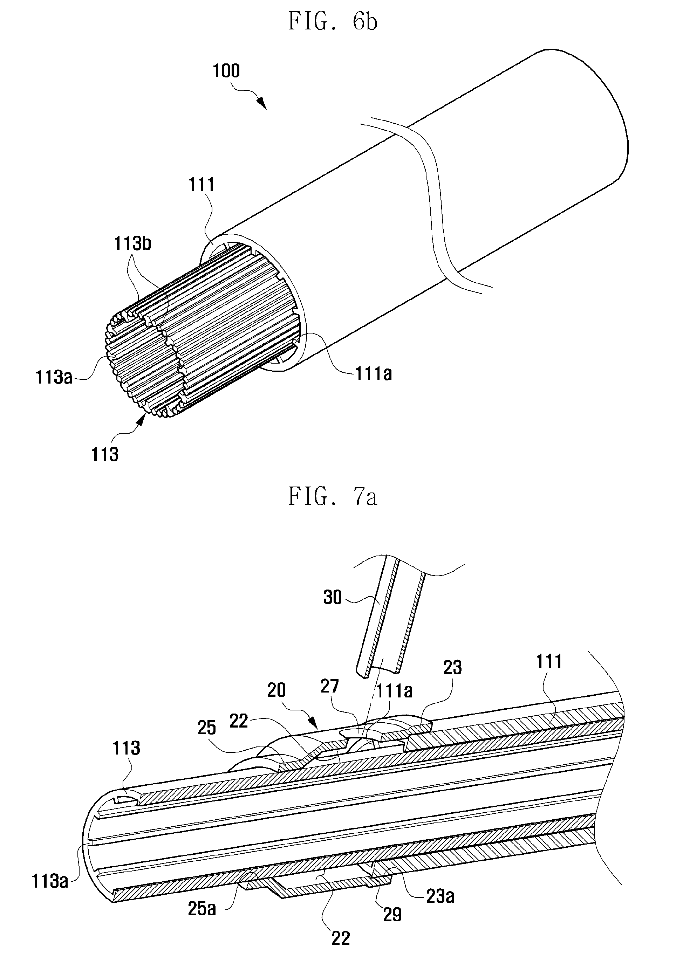

FIG. 5 is a perspective view illustrating a separated double pipe of a double pipe heat exchanger according to another exemplary embodiment of the present invention, and FIGS. 6A and 6B are perspective views illustrating modified examples of the separated double pipe of FIG. 5.

Referring to FIGS. 5, 6A, and 6B, unlike the integral double pipe 10 of the foregoing exemplary embodiment, in a separated double pipe 100 according to the present exemplary embodiment, an outer pipe 111 and an inner pipe 113 are separated.

The separated double pipe 100 includes a plurality of first protruding portions 111a and a plurality of second protruding portions 113a. The plurality of first protruding portions 111a are disposed between the outer pipe 111 and the inner pipe 113, formed in a length direction and disposed at a predetermined distance in a circumferential direction in one of an inner circumferential surface of the inner pipe 113 and an outer circumferential surface of the inner pipe 113. The plurality of second protruding portions 113a are formed at positions corresponding to each of the plurality of first protruding portions 111a and protruded in a center direction and formed in a length direction of the inner pipe 113 from an inner circumferential surface of the inner pipe 113.

As in the integral double pipe 10 of the foregoing exemplary embodiment, a liquid refrigerant of a high temperature and a high pressure flows in an outer pipe flow path 2a formed between the outer pipe 111 and the inner pipe 113.

A gas refrigerant of a low temperature and a low pressure flows an inner pipe flow path 3a formed in the inner pipe 113.

FIGS. 6A and 6B illustrate modified examples of the separated double pipe 100 of FIG. 5.

Referring to FIG. 6A, a first protruding portion 111a formed in an inner circumferential surface of the outer pipe 111 of FIG. 5 is formed in an outer circumferential surface of the inner pipe 113.

The first protruding portion 111a and the second protruding portions 113a are alternately disposed.

Referring to FIG. 6B, in at least one of an outer circumferential surface and an inner circumferential surface of the inner pipe 113, an uneven portion 113b is formed in a portion in which the second protruding portion 113a is not formed, as shown in FIG. 2C.

In FIG. 6B, the uneven portion 113b is formed in both an outer circumferential surface and an inner circumferential surface of the inner pipe 113, however it may be formed only in an outer circumferential surface or an inner circumferential surface.

In addition to the above-described elements, a configuration of the present exemplary embodiment and modified examples thereof can be applied to the foregoing exemplary embodiment, and a configuration the foregoing exemplary embodiment and modified examples thereof can be applied to the present exemplary embodiment.

The separated double pipe 100 is made of one of aluminum, iron, plastic, and stainless steel.

A refrigerant flowing the separated double pipe 100 is HFO-based 1234yf.

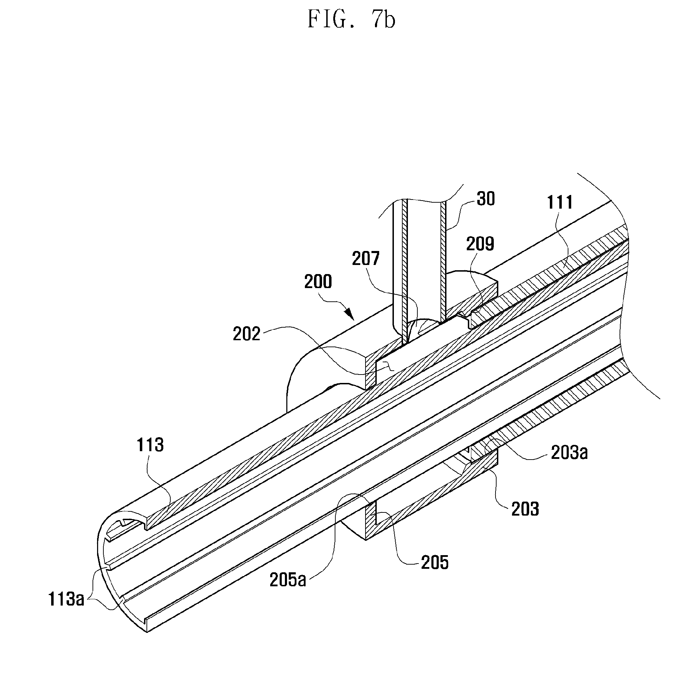

FIG. 7A is a perspective view illustrating a separated double pipe coupled to the connector of FIG. 3A, and FIG. 7B is a perspective view illustrating a separated double pipe coupled to the connector of FIG. 3B.

Referring to FIGS. 3A, 3B, 7A, and 7B, a double pipe heat exchanger of the present exemplary embodiment includes a separated double pipe 100 and each of connectors 20 and 200 of the foregoing exemplary embodiment coupled to an end portion of the separated double pipe 100.

The connectors 20 and 200 have been described in the foregoing exemplary embodiment and therefore a detailed description thereof is omitted.

In order to insert the connectors 20 and 200, when the outer pipe 111 is coupled to the inner pipe 113, the outer pipe 111 moves to a coupling position of the connector 200 along an outer circumferential surface of the inner pipe 113.

Therefore, the connectors 20 and 200 are coupled to the outer pipe 111 through outer pipe openings 23a and 203a of outer pipe couplers 23 and 203, and are coupled to the inner pipe 113 through inner pipe openings 25a and 205a such that the inner pipe 113 extends to the outside of the connectors 20 and 200 through inner pipe openings 25a and 205a. When the outer pipe 111 and the inner pipe 113 are coupled, by welding both ends of each of the connectors 20 and 200, they are fixed and leakage of a solvent is prevented.

In the integral double pipe 10, in order to expose the inner pipe 13, the outer pipe 11 should be cut, however in the separated double pipe 100, the outer pipe 11 moves along an outer circumferential surface of the inner pipe 13, and thus it is unnecessary to cut the outer pipe 111. Each of spaces 22 and 202 to be connected to an outer pipe flow path 2a (see FIG. 5) of the separated double pipe 100 without cutting the outer pipe 11 is formed. A length of the outer pipe 111 is shorter than that of the inner pipe 113.

An outer refrigerant pipe 30 is coupled to each of the external insertion holes 27 and 207 of each of the connectors 20 and 200 coupled to both sides of the separated double pipe 100.

Therefore, as in the integral double pipe 10, by each of the connectors 20 and 200 coupled to one side of the integral double pipe 10 and coupled to the other side of the integral double pipe 10, a closed loop is formed in the outer pipe 111, and a liquid refrigerant of a high temperature and a high pressure flows through the outer refrigerant pipe 30 coupled to each of the external insertion holes 27 and 207.

In the inner pipe 113, a gas refrigerant of a low temperature and a low pressure flows in an opposite direction and thus heat exchange can be performed.

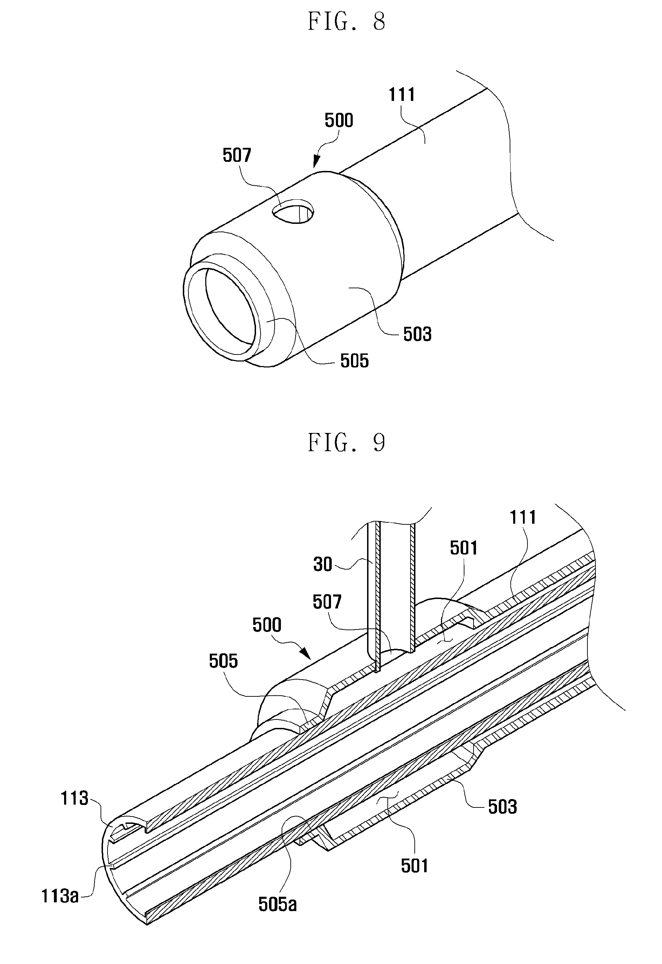

FIG. 8 is a perspective view illustrating an integral connector formed in an outer pipe of the separated double pipe, and FIG. 9 is a perspective view illustrating a separated double pipe having the integral connector of FIG. 8.

Referring to FIGS. 8 and 9, in both end portions of the outer pipe 111 of the separated double pipe 100 of the present exemplary embodiment, an expanded pipe portion 503 having an inner diameter larger than that of the outer pipe 111 is integrally formed.

An integral connector 500 is formed in the separated double pipe 100 by the expanded pipe portion 503.

The integral connector 500 includes an expanded pipe portion 503 integrally formed from an end portion of the outer pipe 111 and having a diameter greater than an outer diameter of the outer pipe 111 and having an inner space 501, and a reduced pipe portion 505 having the reduced other end to couple to the outer circumference of the inner pipe 113 and having an inner pipe opening 505a, and an external insertion hole 507 for inserting an outer circumferential surface toward the inner space 501.

The inner pipe 113 is inserted through the inner pipe opening 505a of the reduced pipe portion 505 of the integral connector 500, and by welding an end portion of the reduced pipe portion 505, they are fixed and leakage of a solvent is prevented.

The outer refrigerant pipe 30 is coupled to the external insertion hole 507 of the integral connector 500. A circulation path of a refrigerant has been described above and therefore a detailed description thereof is omitted.

The integral connector 500 of FIG. 8 has the same shape as that of the connector 20 of FIG. 3A, however may have the same shape as that of the connector 200 of FIG. 3B.

As described above, according to the present invention, by improving a thermal conductivity of a refrigerant by a double pipe structure, efficiency and performance of a vehicle air conditioning system can be improved.

By the double pipe structure, a thickness of the outer pipe and the inner pipe can be minimized.

By improving heat exchange efficiency by a heat exchanger having a double pipe, cooling efficiency of a cooling system can be improved.

Although exemplary embodiments of the present invention have been described in detail hereinabove, it should be clearly understood that many variations and modifications of the basic inventive concepts herein described, which may appear to those skilled in the art, will still fall within the spirit and scope of the exemplary embodiments of the present invention as defined in the appended claims.

## Claims

1. A double pipe comprising an outer pipe and an inner pipe formed within the outer pipe, comprising:
a plurality of barrier ribs formed in a length direction and disposed at a predetermined distance in a circumferential direction between the outer pipe and the inner pipe; and
a plurality of protruding portions formed at positions corresponding to each of the plurality of barrier ribs and protruded in a center direction and formed in a length direction of the inner pipe from an inner circumferential surface of the inner pipe.

2. The double pipe of claim 1, wherein all the outer pipe, the inner pipe, the plurality of barrier ribs, and the plurality of protruding portions are integrally formed.

3. The double pipe of claim 1, wherein a plurality of grooves formed in a length direction and disposed at a predetermined distance in a circumferential direction are formed in an outer circumferential surface of the outer pipe.

4. The double pipe of claim 1, wherein an additional protruding portion is formed between two adjacent protruding portions of the plurality of protruding portions.

5. The double pipe of claim 1, wherein in at least one of an outer circumferential surface and an inner circumferential surface of the inner pipe, an uneven portion is formed in a portion in which the plurality of protruding portions are not formed.

6. The double pipe of any one of claims 1 to 4, wherein an uneven portion is formed in a surface of the protruding portion.

7. A double pipe heat exchanger having a double pipe of any one of claims 1 to 6, the double pipe heat exchanger further comprising:
a connector coupled to an end portion of the double pipe,
wherein all the outer pipe, the inner pipe, the plurality of barrier ribs, and the plurality of protruding portions are integrally formed, and
an outer pipe opening for inserting the double pipe is formed at one side of the connector, an inner pipe opening for inserting the other pipe having the same diameter as that of the inner pipe of the double pipe is formed at the other side of the connector, and space to be connected to an outer pipe flow path formed between the inner pipe and the outer pipe of the double pipe is formed within the connector.

8. A double pipe comprising an outer pipe and an inner pipe formed within the outer pipe, comprising:
a plurality of first protruding portions formed in a length direction and disposed at a predetermined distance in a circumferential direction in one of an inner circumferential surface of the outer pipe and an outer circumferential surface of the inner pipe, between the outer pipe and the inner pipe; and
a plurality of second protruding portions formed at positions corresponding to each of the first protruding portions and protruded in a central direction and formed in a length direction of the inner pipe from an inner circumferential surface of the inner pipe.

9. The double pipe of claim 8, wherein an expanded pipe portion having an inner diameter greater than that of the outer pipe is integrally formed in both end portions of the outer pipe.

10. A double pipe heat exchanger comprising the double pipe of claims 8 or 9.
